# FASCICULE DE BREVET EUROPEEN

(11) **EP 2 360 907 B1**
(45) Date de publication et mention de la délivrance du brevet: **04.09.2019**
(21) Numéro de dépôt: 11150849.5
(22) Date de dépôt: 13.01.2011
(51) Int. Cl.: H04N 1/32, H04N 1/00, H04N 1/44

(54) **Procédé de transmission sécurisée utilisant un serveur de télécopie, système et programme d'ordinateur pour la mise en oeuvre de ce procédé**
Verfahren zur sicheren Übertragung mit einem Fax-Server, System und Computerprogrammprodukt zur Umsetzung dieses Verfahrens
Secure transmission method using a fax server, computer system and program for implementing said method

(30) Priorité: 15.01.2010 FR 1050268; 14.09.2010 FR 1057342
(43) Date de publication de la demande: 24.08.2011
(73) Titulaire: J2 Global IP Limited, Dublin 17 (IE)
(72) Inventeur: Popesco, Vladimir, 78800 Houilles (FR)
(74) Mandataire: Lebkiri, Alexandre

(56) Documents cités:
- US-A- 5 790 790
- US-A- 6 034 687
- US-A1- 2005 055 433
- US-A1- 2007 229 889
- "TIFF Specification Revision 6.0", TIFF REVISION 6.0, XX, XX, 3 juin 1992 (1992-06-03), pages 1-121, XP002328630,
- DAN WING CISCO SYSTEMS ET AL: "Scenerios for Delivery of FAX messages over SMTP; draft-ietf-fax-scenerios-00.txt", 19971111, vol. fax, 11 November 1997 (1997-11-11), XP015018347, ISSN: 0000-0004

## Description

### Domaine de l'invention

Le domaine de l'invention est celui de la transmission de documents vers un destinataire équipé d'un télécopieur.

### Etat de la technique

On connaît dans l'état de la technique un procédé décrit dans la demande de brevet européen EP609143, mettant en oeuvre un serveur de télécopie recommandées pour la communication entre un émetteur et un récepteur, tout deux équipés de télécopieurs.

Le but de cette solution de l'art antérieur est de renforcer le niveau de sécurité offert par les télécopieurs: confidentialité, authentification, intégrité, non-répudiation, détection de rejet. Cette invention vise à remédier au fait que les télécopieurs n'offrent pas de sécurité au cas de répudiation d'une télécopie par son destinataire : Une personne destinataire d'une télécopie peut nier avoir reçu le document que l'émetteur certifie lui avoir transmis. Il est alors impossible à l'émetteur de prouver la mauvaise foi éventuelle du destinataire ou vice-versa au destinataire de prouver sa bonne foi en prouvant qu'il n'a effectivement rien reçu.

### Inconvénient de l'art antérieur

Une telle solution n'est utilisable que par des utilisateurs-émetteurs disposant d'un télécopieur. Ceci constitue une limitation car elle oblige l'émetteur à disposer d'un équipement de moins en moins utilisé, nécessitant un accès généralement à un réseau RTC, ce qui constitue une autre limitation notamment dans les environnements professionnels où le réseau RTC disparaît au profit de réseaux numériques intégrant les protocoles informatiques et télécom.

Les documents US 5 790 790 A « Electronic document delivery system in which notification of said electronic document is sent to a recipient therof » ; « TIFF Spécification Revision 6.0 » ; US 2007/229889 A1 « Method and system for pay per use document transfer via computer network transfer protocols » ; US 6 034 687 A « Graphical interface for a computer hardware resource having a surrealistic image of a real office machine » ; « Scenerios for Delivery of FAX messages over SMTP ; draft-ietf-fax-scenerios-OO.txt » par Dan Wing, Cisco Systems Inc. et US 2005/055433 A1 « System and method for advanced rule création and management within an integrated virtual workspace » sont connus de l'art antérieur.

### Solution apportée par l'invention

L'invention a pour but de remédier à cet inconvénient en proposant un procédé de transmission sécurisée utilisant un serveur de télécopie, comprenant les étapes suivantes :
- une étape de transmission, par l'émetteur, à un serveur du document à télécopier, sous la forme d'un fichier numérique d'un format non-télécopie, ainsi qu'une information relative à l'identité du destinataire
- une étape de calcul d'un fichier de format Tiff à partir dudit fichier numérique d'une part, de la date et de l'heure de création dudit fichier et d'un fichier informatif d'autre part,
- une étape de calcul d'une signature à partir dudit document Tiff et d'inscription du résultat de ce calcul dans un fichier complémentaire
- l'enregistrement desdits fichiers dans un espace sécurisé accessible par l'émetteur et le destinataire
- la modification dudit fichier Tiff à transmettre pour insérer ladite signature et une information permettant au destinataire d'accéder auxdits fichiers enregistrés
- la transmission par le serveur à l'adresse téléphonique du destinataire dudit fichier, selon un standard télécopie

L'invention concerne également un système de transmission sécurisée utilisant un serveur de télécopie, comprenant un serveur dialoguant avec un serveur de conversion et de signature procédant à une conversion du fichier reçu par le serveur de conversion et de signature, le système étant configuré pour réaliser les étapes suivantes :
- une étape de transmission, par l'émetteur, à un serveur du document à télécopier, sous la forme d'un fichier numérique d'un format non-télécopie, ainsi qu'une information relative à l'identité du destinataire
- une étape de calcul d'un fichier de format Tiff à partir dudit fichier numérique d'une part, de la date et de l'heure de création dudit fichier et d'un fichier informatif d'autre part,
- une étape de calcul d'une signature à partir dudit document Tiff et d'inscription du résultat de ce calcul dans un fichier complémentaire
- l'enregistrement desdits fichiers dans un espace sécurisé accessible par l'émetteur et le destinataire
- la modification dudit fichier Tiff à transmettre pour insérer ladite signature et une information permettant au destinataire d'accéder auxdits fichiers enregistrés
- la transmission par le serveur à l'adresse téléphonique du destinataire dudit fichier, selon un standard télécopie
- l'émission par le serveur d'un rapport de transmission sous la forme d'un message électronique à un format non-télécopie.

L'invention concerne également un programme d'ordinateur pour la réalisation du procédé de transmission sécurisée décrit ci-dessus.

### Description détaillée

La description qui suit concerne un exemple non limitatif de réalisation de l'invention, se référant aux dessins annexés où :
- la figure 1 représente un schéma fonctionnel d'un exemple de mise en oeuvre de l'invention
- La figure 2 représente une vue d'un exemple de formulaire standardisé d'information.
- La figure 3 représente une vue d'un exemple de formulaire standardisé d'information renseignée.

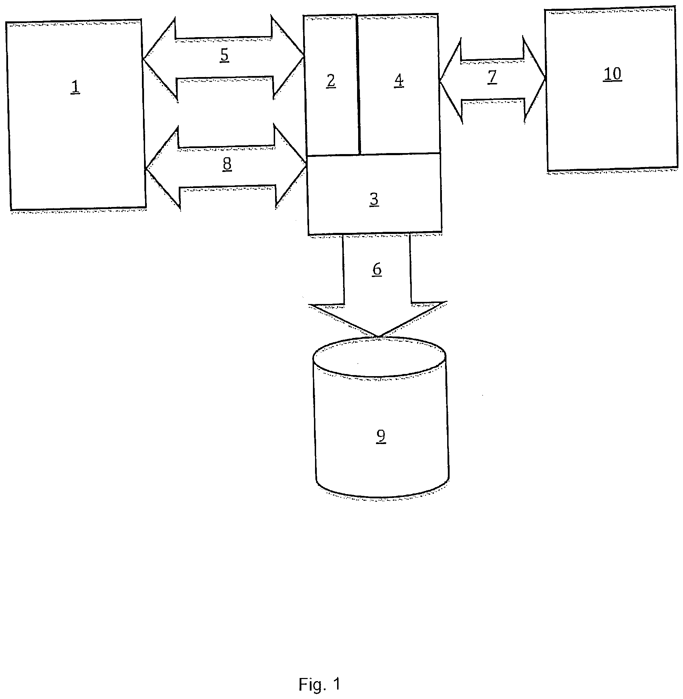

La figure 1 représente une vue schématique de l'invention.

L'utilisateur émetteur utilise un équipement informatique (1), par exemple un ordinateur personnel, un téléphone portable ou une tablette informatique, communiquant avec le réseau Internet de manière connue.

Il établit une session sécurisée (5) avec un serveur informatique (2).

Cette session ouvrira un dialogue qui sera décrit plus en détail dans ce qui suit, permettant à l'émetteur de transmettre un fichier numérique destiné à être communiqué à un destinataire équipé d'un télécopieur (10) par le biais d'une transmission (7).

Le serveur (2) dialogue avec un serveur de conversion et de signature (3) qui procède à une conversion du fichier reçu par le serveur de conversion et de signature (3) en un fichier image TIFF. Ce fichier TIFF est constitué de l'image du document émis, et complété par une page d'information standardisée. Ce fichier TIFF est ensuite horodaté, puis encapsulé dans un format adapté à une lecture avec un éditeur standard, par exemple le format PDF, puis signé.

Ce fichier PDF est ensuite soumis, dans la session (5) à l'émetteur (1) pour vérification et validation. Après validation, ce fichier est enregistré dans une base de données (9) par une liaison sécurisée (6).

Le fichier TIFF est ensuite, après ladite validation, modifié par l'ajout dans la dernière page correspondant au formulaire standardisé, des éléments d'authentification calculés par le serveur (3), à savoir la signature du fichier, et les éléments qui permettront d'accéder ultérieurement au fichier enregistré dans la base (9).

Le fichier est ensuite transmis au télécopieur (10) du destinataire par une transmission facsimilée standard.

Cette transmission aboutit à un rapport de transmission qui est ensuite transmis à l'émetteur par une session (8), par message électronique ou par une interface web.

Le protocole de traitement sera décrit ci-après de manière plus détaillée. La chaîne de traitement comporte les étapes suivantes :
L'émetteur du fax recommandé, depuis son équipement (1), transmet le fichier électronique contenant l'information à faxer, dans l'un des formats que le système de conversion sait lire et transformer en bitmap.

Le fichier est converti en une image encodée avec un standard de fax (ITU -T T.4 ou T.6) et une image de la page qui contiendra la signature ainsi que les éléments permettant l'accès aux données certifiées est ajoutée à la fin.

Cette image (information et page arrière) est encapsulée dans un format de fichier électronique où l'horodatage peut être inséré en tant que métadonnée.

Le fichier ainsi obtenu est signé numériquement à l'aide d'éléments de cryptographie non réversible et un code d'accès aux données est généré. Cette signature authentifie de manière unique le document ainsi la date et l'heure où il a été signé, avant de démarrer le processus de télécopie. Le document et la signature seront archivés de manière sécurisée pendant trois années pour servir de preuve légale en cas de différend entre l'émetteur et le destinataire.

La signature et les codes d'accès sont ajoutés sur la dernière page du document qui est alors transmis par fax.

L'accusé de réception fax du destinataire qui est émis après la réception de la dernière page, garantit la transmission correcte de toute l'information.

L'émetteur (à partir de son compte en ligne) et le receveur (grâce aux éléments d'identification renseignés sur la dernière page reçue) ont tous deux accès au document signé, à la signature numérique et à une interface en ligne permettant de valider l'authenticité du couple (document électronique, signature). Un avis de lecture est transmis à l'émetteur lorsque le destinataire accède pour la première fois aux données en ligne

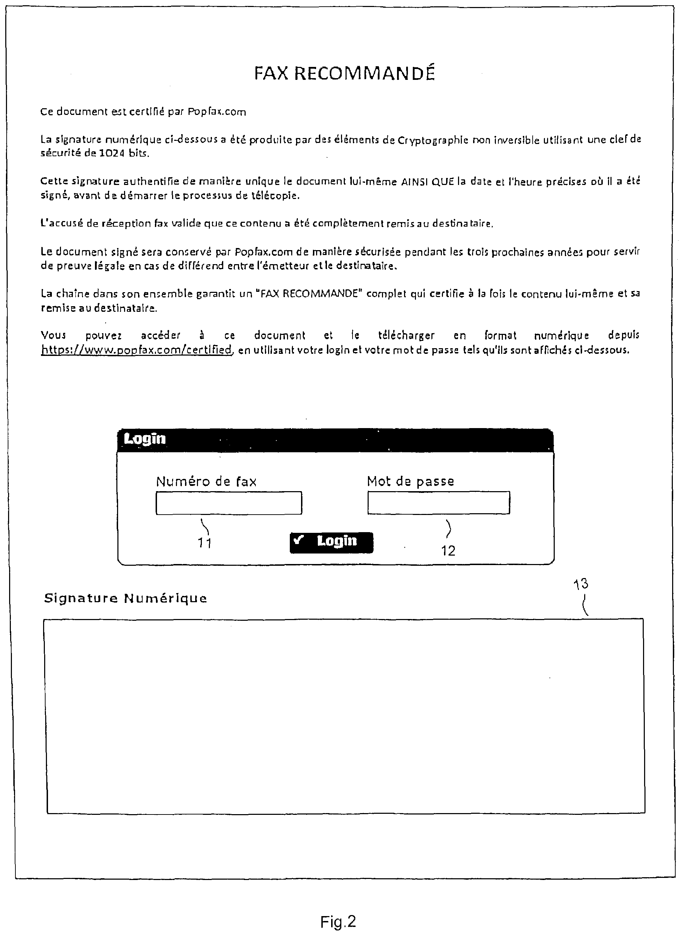

La figure 2 représente une vue d'un exemple de formulaire standardisée d'information.

Ce formulaire est enregistré en mémoire du serveur (2) sous forme d'images, chaque image correspondant à une langue. La sélection de l'image se fait en fonction des préférences enregistrées par défaut par l'émetteur, ou en fonction d'un choix spécifique décidé par l'émetteur au moment de l'envoi d'un nouveau fichier.

La sélection linguistique peut aussi être automatisée, par analyse du texte contenu dans le fichier émis par l'émetteur (1), ou encore par analyse du numéro de télécopie du destinataire pour en déduire la langue.

Lors de la réception d'un fichier transmis par l'émetteur (1), le serveur (3) reconnaît le format dudit fichier (par exemple Word ™, Excel ™, PDF ™, JPEG, Powerpoint™,...), et le convertit en un format image multipages TIFF noir et blanc. Le serveur (3) ajoute après cette conversion la page formulaire pour construire une image multipages enrichie qui constituera le document de référence.

Après validation, le serveur (3) modifie ladite image multipages en modifiant la partie correspondant au formulaire par l'inscription dans les zones (11, 12, 13) des données techniques, à savoir :
- le numéro de télécopie du destinataire
- un mode de passe calculé par le serveur (3)
- la signature calculée par le serveur (3)

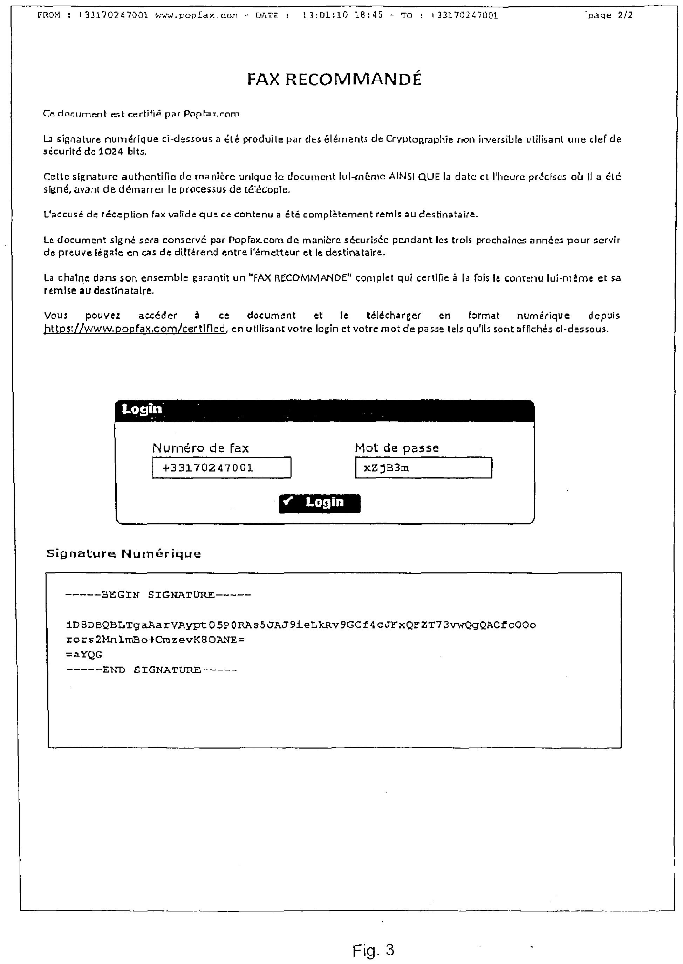

La page ainsi renseignée est représentée en figure 3.

L'ajout de texte dans cette page par impression dans le bitmap TIFF se fait juste avant envoi et uniquement pour l'information du destinataire, sans altérer le contenu du message de l'émetteur. Cette opération est réalisée par un traitement informatique consistant à extraire la dernière page, à générer deux images à partir des chaines de caractères contenues dans les champs "login" et "password", et à fusionner ces images à une position fixe dans la dernière page, avant de réincorporer cette page dans un fichier au format TIFF.

Cet ajout peut par exemple être réalisé en utilisant la librairie « ImageMagick », la fonction "convert" pour générer une image a partir d'une chaine de caractères et la fonction "composite" pour fusionner les images générées avec la dernière page. Les coordonnées des zones (11 à 13) sont enregistrées sur le serveur (3) et permettent de déterminer les zones d'inscription des données à insérer.

Du fait du caractère séquentiel de l'émission par fax, l'accusé de réception final du télécopieur destinataire certifie que l'ensemble du message recommandé a été livré.

Les mentions portées sur la dernière page informent le destinataire de manière non équivoque sur le caractère recommandé et certifié du fax, et lui fournissent les éléments nécessaires à la récupération du document original.

Les deux parties, à savoir l'émetteur et le destinataire, peuvent accéder à tout moment, au moins pendant une période de sauvegarde prédéterminée, à la base de données (9) pour consulter et obtenir une copie du fichier de référence.

L'accès par l'émetteur aux fichiers de référence correspondant aux fichiers dont il était l'émetteur est conditionné par l'accès sécurisé à son compte, par une procédure de type « code utilisateur » et « mot de passe ».

L'accès par le destinataire aux fichiers de référence correspondant aux fichiers dont il était destinataire est conditionné par l'accès par une interface web, à l'aide du mot de passe figurant dans la zone (12) du fichier de référence qu'il avait reçu.

Selon une variante préférée, les parties accèdent à des fichiers compressés comprenant le fichier de référence ainsi qu'un fichier contenant la signature certifiant ledit fichier de référence.

La vérification de l'authenticité du fichier de référence est réalisée sur le serveur (3), à partir d'une interface permettant de transmettre au serveur d'une part le fichier de référence dont dispose l'utilisateur, et d'autre part la signature présumée correspondre audit fichier de référence. Le serveur renvoie une réponse de confirmation ou d'infirmation de l'authenticité du fichier de référence et de la signature associée. Ceci permet de vérifier l'intégrité du contenu et la véracité de la date d'émission.

Cette procédure peut également être réalisée par un expert disposant de la signature utilisée par le serveur (3).

## Revendications

1. Procédé de transmission sécurisée utilisant un serveur de télécopie, comprenant les étapes suivantes :
- une étape de transmission, par un émetteur (1), à un serveur (2) du document à télécopier, sous la forme d'un fichier numérique d'un format non-télécopie, ainsi qu'une information relative à l'identité du destinataire ;
- une étape de calcul d'une part d'un fichier de format TIFF à partir dudit fichier numérique complété d'une page d'information standardisée et d'autre part de la date et de l'heure de création dudit fichier TIFF ;
- une étape d'encapsulation dudit fichier TIFF horodaté dans un fichier au format adapté à la lecture avec un éditeur standard tel que le format PDF ;
- une étape de calcul d'une signature à partir dudit fichier TIFF horodaté puis encapsulé et d'inscription du résultat de ce calcul dans un fichier complémentaire ;
- l'enregistrement dudit fichier TIFF horodaté puis encapsulé et dudit fichier complémentaire dans un espace (9) sécurisé accessible par l'émetteur (1) et le destinataire ;
- la modification dudit fichier TIFF horodaté à transmettre pour y insérer sur ladite page d'information standardisée ladite signature, le numéro de télécopie du destinataire et un mot de passe calculé par le serveur (2) permettant au destinataire d'accéder au dit fichier TIFF horodaté puis encapsulé et au dit fichier complémentaire enregistrés ;
- la transmission par le serveur (2) à l'adresse téléphonique du destinataire dudit fichier TIFF horodaté puis modifié, selon un standard télécopie ;
- l'émission par le serveur (2) d'un rapport de transmission sous la forme d'un message électronique à un format non-télécopie ;
- en cas de vérification de l'authenticité d'un fichier de référence dont dispose un utilisateur et d'une signature présumée correspondant au fichier de référence, une étape de transmission au serveur (2) dudit fichier de référence dont dispose l'utilisateur et de la signature présumée et une étape de renvoi par le serveur (2) d'une réponse de confirmation ou d'infirmation de l'authenticité dudit fichier de référence et de la signature associée.

2. Procédé de transmission sécurisée utilisant un serveur de télécopie selon la revendication 1 **caractérisé en ce que** ladite information permettant au destinataire d'accéder auxdits fichiers est enregistrée sous forme de fichiers image correspondant à une pluralité de langues, la sélection du fichier linguistique étant déterminée par l'émetteur (1).

3. Système de transmission sécurisée utilisant un serveur de télécopie, comprenant un serveur (2) dialoguant avec un serveur de conversion et de signature (3) procédant à une conversion d'un fichier reçu par le serveur de conversion et de signature (3), le système étant configuré pour réaliser les étapes suivantes :
- une étape de transmission, par un émetteur (1), au serveur (2) du document à télécopier, sous la forme d'un fichier numérique d'un format non-télécopie, ainsi qu'une information relative à l'identité du destinataire ;
- une étape de calcul, par le serveur de conversion et de signature (3), d'une part d'un fichier de format TIFF à partir dudit fichier numérique complété d'une page d'information standardisée et d'autre part de la date et de l'heure de création dudit fichier TIFF ;
- une étape d'encapsulation, par le serveur de conversion et de signature (3), dudit fichier TIFF horodaté dans un fichier au format adapté à la lecture avec un éditeur standard tel que le format PDF ;
- une étape de calcul, par le serveur de conversion et de signature (3), d'une signature à partir dudit fichier TIFF horodaté puis encapsulé et d'inscription du résultat de ce calcul dans un fichier complémentaire ;
- l'enregistrement dudit fichier TIFF horodaté puis encapsulé et dudit fichier complémentaire dans un espace (9) sécurisé accessible par l'émetteur (1) et le destinataire ;
- la modification dudit fichier TIFF horodaté à transmettre pour y insérer sur ladite page d'information standardisée ladite signature, le numéro de télécopie du destinataire et un mot de passe calculé par le serveur permettant au destinataire d'accéder au dit fichier TIFF horodaté puis encapsulé et au dit fichier complémentaire enregistrés ;
- la transmission par le serveur (2) à l'adresse téléphonique du destinataire dudit fichier TIFF horodaté puis modifié, selon un standard télécopie ;
- l'émission par le serveur (2) d'un rapport de transmission sous la forme d'un message électronique à un format non-télécopie ;
- en cas de vérification de l'authenticité d'un fichier de référence dont dispose un utilisateur et d'une signature présumée correspondant au fichier de référence, une étape de transmission au serveur (2) dudit fichier de référence dont dispose l'utilisateur et de la signature présumée et une étape de renvoi par le serveur (2) d'une réponse de confirmation ou d'infirmation de l'authenticité dudit fichier de référence et de la signature associée.

4. Programme d'ordinateur pour la réalisation du procédé de transmission sécurisée conforme à l'une au moins des revendications 1 ou 2.

## Patentansprüche

1. Einen Telefaxserver verwendendes gesichertes Übertragungsverfahren, umfassend die folgenden Schritte:
- einen Übertragungsschritt eines telefaxfremden Formats sowie einer Information relativ zum Empfänger durch einen Sender (1) auf einen Server (2) des zu faxenden Dokuments in Form einer digitalen Datei;
- einen Berechnungsschritt einerseits einer Datei im Format TIFF ausgehend von der genannten digitalen Datei, die durch eine genormte Informationsseite vervollständigt ist und andererseits des Datums und der Erstellungszeit der genannten Datei TIFF;
- einen Verkapselungsschritt der genannten, zeitgestempelten Datei TIFF in einem zum Lesen mit einem Standard-Editor, wie z. B. dem Format PDF, geeigneten Format;
- einen Berechnungsschritt einer Signatur ausgehend von der genannten zeitgestempelten und dann verkapselten Datei TIFF und der Eintragung des Ergebnisses dieser Berechnung in einer komplementären Datei;
- Speicherung der genannten zeitgestempelten und dann verkapselten Datei TIFF und der genannten komplementären Datei in einem gesicherten Raum (9), der vom Sender (1) und dem Empfänger zugänglich ist;
- die Modifizierung der genannten zeitgestempelten, zu übertragenden Datei TIFF, um dort die genannte Signatur, die Telefaxnummer des Empfängers und ein vom Server (2) berechnetes Passwort, das dem Empfänger das Zugreifen auf die genannte zeitgestempelte und dann verkapselte Datei und registrierte Datei TIFF und auf die genannte komplementäre, registrierte Datei ermöglicht, auf der standardisierten Informationsseite einzutragen;
- Übertragung durch den Server (2) auf die Telefonadresse des Empfängers der genannten zeitgestempelten und dann modifizierten Datei TIFF gemäß einem Faxstandard;
- die Sendung eines Übertragungsberichts durch den Server (2) in Form einer elektronischen Nachricht in einem telefaxfremden Format;
- bei einer Überprüfung der Echtheit einer Referenzdatei, über die ein Nutzer verfügt, und einer vermuteten Signatur, die der Referenzdatei entspricht, einen Übertragungsschritt auf den Server (2) der genannten Referenzdatei, über die der Nutzer verfügt, und der vermuteten Signatur und einen Rücksendeschritt durch den Server (2) einer Bestätigungs- oder Entkräftungsantwort der Echtheit der genannten Referenzdatei und der zugeordneten Signatur.

2. Gesichertes Übertragungsverfahren, das einen Telefaxserver gemäß Anspruch 1 verwendet, **dadurch gekennzeichnet, dass** die genannte Information, die dem Empfänger das Zugreifen auf die genannten Dateien ermöglicht, in Form von Bilddateien gespeichert ist, die einer Vielzahl von Sprachen entsprechen, wobei die Auswahl der linguistischen Datei durch den Sender (1) bestimmt wird.

3. Gesichertes Übertragungsverfahren, das einen Telefaxserver verwendet, umfassend einen Server (2), der mit einem Umwandlungs- und Signaturserver (3) im Dialog steht und eine Umwandlung einer vom Umwandlungs- und Signaturserver (3) empfangenen Datei vornimmt, wobei das System zum Realisieren der folgenden Schritte gestaltet ist:
- einen Übertragungsschritt durch einen Sender (1) auf den Server (2) des in Form einer digitalen Datei eines telefaxfremden Formats zu faxenden Dokuments sowie einer Information über die Identität des Empfängers;
- einen Berechnungsschritt durch den Umwandlungs- und Signaturserver (3) einerseits einer Datei im Format TIFF ausgehend von der vervollständigten digitalen Datei einer genormten Informationsseite und andererseits des Erstellungsdatums und der Erstellungsuhrzeit der genannten Datei TIFF;
- einen Verkapselungsschritt durch den Umwandlungs- und Signaturserver (3) der genannten zeitgestempelten Datei TIFF in einer Datei in einem zum Lesen mit einem Standard-Editor, wie z. B. dem Format PDF, geeigneten Format;
- einen Berechnungsschritt durch den Umwandlungs- und Signaturserver (3) einer Signatur ausgehend von der genannten zeitgestempelten und dann verkapselten Datei TIFF und der Eintragung des Ergebnisses dieser Berechnung in einer komplementären Datei;
- Speicherung der genannten zeitgestempelten und dann verkapselten Datei TIFF und der genannten komplementären Datei in einem gesicherten Raum (9), der vom Sender (1) und Empfänger zugänglich ist;
- Modifizierung der genannten zeitgestempelten, zu übertragenden Datei TIFF, um dort auf der genannten genormten Informationsseite die genannte Signatur, die Telefaxnummer des Empfängers und ein vom Server berechnetes Passwort einzufügen, das dem Empfänger das Zugreifen auf die genannte zeitgestempelte und dann verkapselte, gespeicherte Datei TIFF und auf die genannte komplementäre gespeicherte Datei ermöglicht;
- die Übertragung durch den Server (2) auf die Telefonadresse des Empfängers der genannten zeitgestempelten und dann modifizierten Datei TIFF gemäß einem Telefaxstandard;
- die Übertragung durch den Server (2) eines Übertragungsberichts in Form einer elektronischen Nachricht in einem telefaxfremden Format;
- bei der Überprüfung der Echtheit einer Referenzdatei, über die ein Nutzer verfügt, und einer vermuteten Signatur, die der Referenzdatei entspricht, einen Übertragungsschritt auf den Server (2) der genannten Referenzdatei, über die der Nutzer verfügt, und der vermuteten Signatur und einen Rücksendeschritt durch den Server (2) einer Bestätigungs- oder Entkräftungsantwort der Echtheit der genannten Referenzdatei und der zugeordneten Signatur.

4. Computerprogramm zur Realisierung des gesicherten Übertragungsverfahrens gemäß wenigstens einem der Ansprüche 1 oder 2.

## Claims

1. Method of secure transmission using a fax server, comprising the following steps:
- a step of transmitting, by an emitter (1), to a server (2) the document to be faxed, in the form of a digital file with a non-fax format, as well as information concerning the identity of the addressee;
- a step of calculating on the one hand a file in TIFF format using said digital file supplemented with a standardised information page and on the other hand the date and time said TIFF file was created;
- a step of encapsulating said timestamped TIFF file in a file in a format suitable for reading with a standard editor such as the PDF format;
- a step of calculating a signature using said timestamped then encapsulated TIFF file and of registering the result of this calculation in a complementary file;
- the recording of said timestamped then encapsulated TIFF file and of said complementary file in a secure space (9) that can be accessed by the emitter (1) and the addressee;
- the modification of said timestamped TIFF file to be transmitted in order to insert therein on said standardised information page said signature, the fax number of the addressee and a password calculated by the server (2) allowing the addressee to access said saved timestamped then encapsulated TIFF file and said complementary file;
- the transmission by the server (2) to the telephone address of the addressee of said timestamped then modified TIFF file, according to a fax standard;
- the emitting by the server (2) of a transmission report in the form of an electronic message with a non-fax format;
- in case of the verification of the authenticity of a reference file that a user has and of a presumed signature that corresponds to the reference file, a step of transmitting to the server (2) said reference file that the user has and the presumed signature and a step of returning by the server (2) of a response for confirmation or information on the authenticity of said reference file and of the associated signature.

2. Method of secure transmission using a fax server according to claim 1 **characterised in that** said information allowing the addressee to access said files is recorded in the form of image files that correspond to a plurality of languages, with the selection of the language file being determined by the emitter (1).

3. System of secure transmission using a fax server, comprising a server (2) that dialogues with a conversion and signature server (3) that proceeds with converting a file received by the conversion and signature server (3), with the system being configured to carry out the following steps:
- a step of transmitting, by an emitter (1), to the server (2) of the document to be faxed, in the form of a digital file with a non-fax format, as well as information concerning the identity of the addressee;
- a step of calculating, by the conversion and signature server (3), on the one hand of a TIFF format file using said digital file supplemented with a standardised information page and on the other hand of the date and time said TIFF file was created;
- a step of encapsulating, by the conversion and signature server (3), of said timestamped TIFF file in a file in a format suitable for reading with a standard editor such as the PDF format;
- a step of calculating, by the conversion and signature server (3), of a signature using said timestamped then encapsulated TIFF file and of registering the result of this calculation in a complementary file;
- the recording of said timestamped then encapsulated TIFF file and of said complementary file in a secure space (9) that can be accessed by the emitter (1) and the addressee;
- the modification of said timestamped TIFF file to be transmitted in order to insert therein on said standardised information page said signature, the fax number of the addressee and a password calculated by the server allowing the addressee to access said saved timestamped then encapsulated TIFF file and said complementary file;
- the transmission by the server (2) to the telephone address of the addressee of said timestamped then modified TIFF file, according to a fax standard;
- the emitting by the server (2) of a transmission report in the form of an electronic message with a non-fax format;
- in case of the verification of the authenticity of a reference file that a user has and of a presumed signature that corresponds to the reference file, a step of transmitting to the server (2) said reference file that the user has and the presumed signature and a step of returning by the server (2) of a response for confirmation or information on the authenticity of said reference file and of the associated signature.

4. Computer program for the carrying out of the method of secure transmission in accordance with at least one of claims 1 or 2.
